# EUROPÄISCHE PATENTSCHRIFT

(11) **EP 2 924 302 B1**
(45) Veröffentlichungstag und Bekanntmachung des Hinweises auf die Patenterteilung: **02.11.2016**
(21) Anmeldenummer: 14162446.0
(22) Anmeldetag: 28.03.2014
(51) Int. Cl.: F16B 13/12

(54) **Spreizdübel**
Expandable dowel
Cheville expansible

(43) Veröffentlichungstag der Anmeldung: 30.09.2015
(73) Patentinhaber: HILTI Aktiengesellschaft, 9494 Schaan (LI)
(72) Erfinder: Schaeffer, Marc, 6800 Feldkirch-Nofels (AT)
(74) Vertreter: Hilti Aktiengesellschaft Corporate Intellectual Property

(56) Entgegenhaltungen:
- DE-A1- 3 241 158

## Beschreibung

Die Erfindung betrifft einen Spreizdübel, insbesondere aus Kunststoff, gemäss dem Oberbegriff des Anspruchs 1. Ein solcher Spreizdübel ist ausgestattet mit einem Schaft, der einen vom rückwärtigen Ende des Schafts ausgehenden Halsbereich sowie einen Spreizbereich aufweist, der sich, axial zum vorderen Ende des Schafts hin versetzt, an den Halsbereich anschliesst, und einem Spreizkanal, der den Halsbereich und den Spreizbereich des Schafts durchläuft, wobei der Schaft im Spreizbereich durch Einführen eines Expansionselements in den Spreizkanal zum Verankern des Spreizübels in einem Bohrloch radial aufweitbar ist, und wobei der Spreizkanal im Spreizbereich durch Einstiche gebildet ist, die vom Schaftumfang ausgehen und in das Schaftinnere führen. Die Erfindung betrifft ferner ein Spritzgusswerkzeug zum Herstellen eines solchen Spreizdübels.

Die DE3241158A1 betrifft einen gattungsgemässen Dübel aus Kunststoff mit einem Verankerungsteil, wobei das Verankerungsteil des Dübels ohne Kernnadel gespritzt werden kann. Das Verankerungsteil weist einen in Axialrichtung durchlaufenden Führungskanal auf und ist auf seiner Länge in mehrere zusammenhängende Spreizzonen aufgeteilt. Jede Spreizzone weist einen vom Mantel des Verankerungsteils ausgehenden Einstich auf, dessen Lage von Spreizzone zu Spreizzone um die Dübelachse herum drehversetzt ist. In Axialrichtung sind die Längen der Einstiche gleich den Längen der jeweiligen Spreizzone. Die Einstiche haben jeweils in Mantelumfangsrichtung eine Ausdehnung, die der Projektion des Führungskanals auf die Mantelfläche entspricht. Die Einstiche werden ausschliesslich durch Dornen gefertigt, die an zwei gegenüberliegenden Formhälften angeordnet sind. Daher kann das Verankerungsteil ohne innenliegende Kernnadel gefertigt werden.

Ein weiterer Dübel, bei dem das Verankerungsteil ohne Kernnadel durch von aussen ausgehende Einstiche geformt ist, ist in der Europäischen Patentanmeldung mit der Anmeldenummer 13195462.0 der Hilti Aktiengesellschaft beschrieben.

Aufgabe der Erfindung ist es, einen Spreizdübel anzugeben, der bei hoher Zuverlässigkeit und guten Lastwerten besonders einfach herstellbar ist, und ferner ein Spritzgusswerkzeug für einen solchen Dübel anzugeben.

Die Aufgabe wird erfindungsgemäss durch einen Spreizdübel mit den Merkmalen des Anspruchs 1 und ein Spritzgusswerkzeug zum Herstellen eines solchen Spreizdübels mit den Merkmalen des Anspruchs 3 gelöst. Bevorzugte Ausführungsformen sind in den jeweils abhängigen Ansprüchen angegeben.

Ein erfindungsgemässer Spreizdübel ist dadurch gekennzeichnet, dass der Schaft im Halsbereich einen Schlitz aufweist, der von aussen in den Spreizkanal reicht, der sich ausgehend vom Spreizbereich bis zum rückwärtigen Ende des Schafts erstreckt, und der zum rückwärtigen Ende des Schafts hin offen ist.

Ein Grundgedanke der Erfindung kann darin gesehen werden, den Halsbereich des Dübels mit einem axial verlaufenden Schlitz zu versehen, der sich vom Spreizbereich bis zum rückwärtigen Ende des Schafts erstreckt, das heisst, der sich über den gesamten Halsbereich erstreckt. Dieser Schlitz ermöglicht eine Fertigung des Halsbereichs im Spritzgussverfahren mittels eines Formwulstes, der an einer derjenigen Formhälften angeordnet ist, die auch zum Formen des Spreizbereichs eingesetzt werden. Damit kann nun nicht nur der Spreizbereich, sondern auch der Halsbereich ausschliesslich durch die zwei Formhälften gefertigt werden, ohne dass eine zusätzliche Kernnadel erforderlich wäre. Hierdurch kann der Herstellungsprozess deutlich vereinfacht sein. Zugleich werden die mechanischen Eigenschaften des Dübels meist allenfalls unwesentlich beeinträchtigt, da der Dübel, insbesondere wenn er als Dämmstoffdübel ausgebildet ist, in seinem Halsbereich häufig vorwiegend Zuglasten aufnehmen muss.

Der Schlitz kann insbesondere parallel zur Längsachse des Schafts verlaufen. Soweit hier von "radial", "axial", "diametral" und/oder "Umfangsrichtung" die Rede ist, kann sich dies, insbesondere sofern nicht anders erläutert, auf die Längsachse des Schafts beziehen. Die Längsachse des Schafts verläuft vorzugsweise parallel, insbesondere koaxial, zum Spreizkanal und/oder durch den Spreizkanal hindurch. Der Schaft besteht vorzugsweise aus einem Kunststoffmaterial. Spreizbereich und Halsbereich des Schafts sind vorzugsweise einstückig ausgebildet. Der Spreizkanal ist zum rückwärtigen Ende des Schafts hin offen, so dass das Expansionselement vom rückwärtigen Ende des Schafts her in den Spreizkanal eingeführt werden kann.

Die Einstiche bilden vorzugsweise jeweils den Abdruck eines Dorns, der vom Schaftumfang aus in den Schaft eingedrückt worden ist und anschliessend wieder herausgezogen worden ist. In diesem Fall können die Einstiche in einem Spritzgussverfahren in besonders einfacher Weise hergestellt werden. Vorzugsweise weisen die Einstiche keine Hinterschneidungen auf, so dass ein besonders einfaches Entformen der Dorne möglich ist.

Geeigneterweise ist der Schaftumfang im Spreizbereich und/oder Halsbereich zumindest annähern zylindrisch ausgebildet. Das Verankern des Dübels in einem Bohrloch durch radiales Aufweiten des Spreizbereichs kann insbesondere beinhalten, dass im Spreizbereich angeordnete Spreizelemente des Dübels vom Expansionselement radial an die, vorzugsweise zylindrische, Wand des Bohrlochs angepresst werden. Vorzugsweise nimmt Querschnitt des Spreizkanals im Spreizbereich mit zunehmendem Abstand vom Halsbereich, zumindest schrittweise, ab.

Das Expansionselement kann insbesondere stiftförmig ausgeführt sein. Es kann beispielsweise eine Schraube oder ein Eintreibdorn sein. Insbesondere kann vorgesehen sein, dass der Schaft im Spreizbereich durch Einführen eines zumindest annähernd zylindrischen Bereichs des Expansionselements in den axial innerhalb des Spreizbereichs liegenden Abschnitt des Spreizkanals zum Verankern des Dübels im Bohrloch radial aufweitbar ist. Das Expansionselement kann als Bestandteil des Dübels oder als separates Teil betrachtet werden.

Der Halsbereich wird durch Einführen des Expansionselements in den Spreizkanal zweckmässigerweise nicht oder allenfalls bereichsweise radial aufgeweitet. Zusätzlich zu dem beschriebenen Spreizbereich kann der Spreizdübel unter Umständen auch einen oder mehrere Zusatzspreizbereiche aufweisen, die ebenfalls durch Einführen des Expansionselements in den Spreizkanal zum Verankern des Dübels im Bohrloch radial aufweitbar sind, die aber geometrisch verschieden ausgestaltet sein können. Der zumindest eine Zusatzspreizbereich ist geeigneterweise axial versetzt zum Spreizbereich angeordnet, kann aber unmittelbar an diesen angrenzen.

Der Spreizkanal kann durchgängig ausgeführt sein. Er kann aber auch, insbesondere fertigungsbedingt, eine oder mehrere vom Expansionselement durchstossbare Membranen aufweisen.

Der Spreizdübel kann insbesondere ein Dämmstoffdübel zur Befestigung von Dämmstoffplatten an einer Unterkonstruktion sein. Insbesondere kann er ein Tellerelement mit einem Halteteller für eine Dämmstoffplatte aufweisen, wobei das Tellerelement im Bereich des rückwärtigen Endes des Schafts am Schaft befestigt ist. Beispielsweise kann das Tellerelement über eine Rastverbindung am Schaft befestigt sein.

Die Erfindung betrifft auch ein Spritzgusswerkzeug zum Herstellen des Schafts eines Spreizdübels, insbesondere eines erfindungsgemässen Spreizdübels, mit einer ersten Formhälfte und einer zweiten Formhälfte, wobei an jeder Formhälfte eine Vielzahl von Dornen zum Formen der Einstiche angeordnet ist, und wobei die erste Formhälfte einen Formwulst zum Formen des Spreizkanals im Halsbereich aufweist. Mit einem solchen Formwerkzeug können sowohl der Spreizbereich als auch der Halsbereich kernnadellos gefertigt werden. Die zweite Formhälfte weist eine Ausnehmung auf, die den Formwulst zumindest bereichsweise aufnehmen kann.

Besonders bevorzugt ist es, dass der Formwulst über einen Steg mit der ersten Formhälfte verbunden ist, wobei Steg zumindest eine Hinterschneidung, vorzugsweise zwei Hinterschneidungen bildet. Dieses Ausführungsbeispiel berücksichtigt, dass bei den für Kunststoffdübel üblichen Materialien häufig auch eine gewisse Zwangsentformung aus Hinterschneidungen heraus möglich ist. Indem zwischen Formwulst und erster Formhälfte eine Hinterschneidung, vorzugsweise zwei gegenüberliegende Hinterschneidungen, vorgesehen werden, kann der Schlitz besonders schmal gewählt werden, was die mechanischen Eigenschaften weiter verbessert.

Weiterhin ist es bevorzugt, dass der Steg zumindest bereichsweise in die erste Formhälfte eingesenkt ist. Hierdurch kann eine besonders symmetrische, insbesondere runde, Querschnittsform des Halsbereichs erhalten werden, ohne den Aufwand wesentlich zu erhöhen. Die symmetrischere Querschnittsform ist wiederum im Hinblick auf die mechanischen Eigenschaften des fertigen Dübels vorteilhaft. Auch der Formwulst kann zumindest teilweise in die erste Formhälfte eingesenkt sein, was im Hinblick auf die Symmetrie weiter vorteilhaft ist.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer Ausführungsform eines erfindungsgemässen Dübels, wobei das Tellerelement der Übersichtlichkeit halber nicht dargestellt ist.
- Figur 2:: die Ausführungsform aus Figur 1 mit zusätzlichem Tellerelement in perspektivischer Darstellung ;
- Figur 3:: eine Querschnittsansicht eines erfindungsgemässen Formwerkzeugs zum Herstellen eines Schafts eines Dübels an der Position A-A in Figur 4; und
- Figur 4:: eine Längsschnittansicht des Formwerkzeugs aus Figur 3.

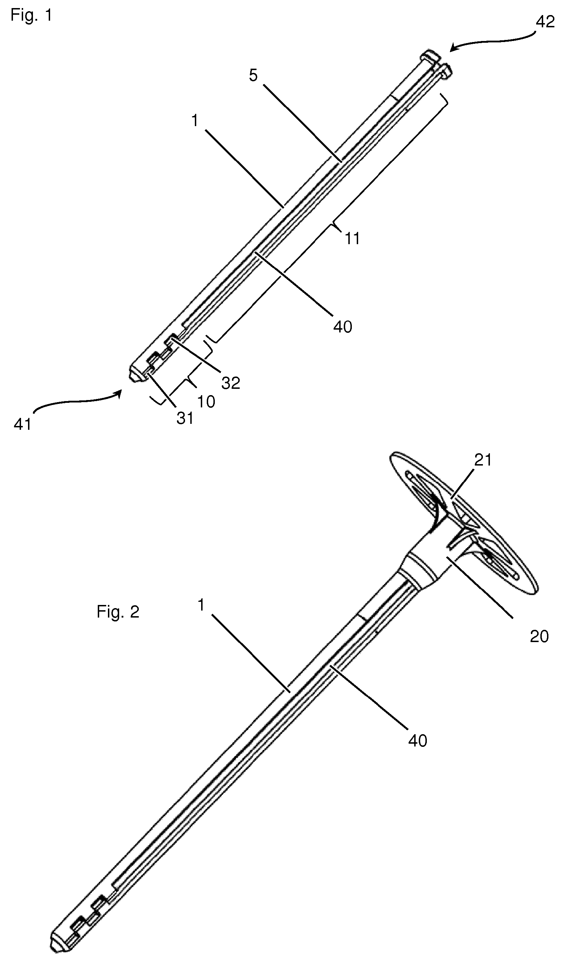

Die Figuren 1 und 2 zeigen ein Ausführungsbeispiel eines erfindungsgemässen Spreizdübels. Der Spreizdübel ist als Dämmstoffdübel ausgebildet und weist als solcher einen Schaft 1 auf, an dessen rückwärtigen Ende 42 ein Tellerelement 20 mit einem Halteteller 21 zum Sichern einer Dämmstoffplatte befestigt. Das Tellerelement 20 und der Schaft 1 können beispielsweise über eine Rastverbindung verbunden sein, oder auch verklebt sein.

Längs durch den Schaft 1 hindurch erstreckt sich im Schaftinneren ein Spreizkanal 5, welcher zum rückwärtigen Ende 42 des Schafts 1 hin offen ist. Der Schaft 1 weist im Anschluss an sein vorderes Ende 41 einen Spreizbereich 10 auf. Dieser Spreizbereich 10 kann zum Verankern an einer Bohrlochwand radial aufgeweitet werden, indem ein nicht dargestelltes stiftartiges Expansionselements vom rückwärtigen Ende 42 des Schafts 1 aus in den Spreizkanal 5 eingebracht wird und hierin bis in den Spreizbereich 10 vorgeschoben wird. Zwischen dem Spreizbereich 10 und dem rückwärtigen Ende 42 weist der Schaft 1 einen Halsbereich 11 auf, der allenfalls eingeschränkt zum Aufweiten durch das Expansionselement vorgesehen ist.

Wie insbesondere Figur 1 zeigt, weist der Schaft 1 im Spreizbereich 10 eine Vielzahl von Einstichen auf, von denen der Übersichtlichkeit halber nur ein Teil mit den Bezugszeichen 31 und 32 gekennzeichnet ist. Die Einstiche 31, 32 bilden im Spreizbereich 10 den Spreizkanal 5. Daher kann der Spreizkanal 5 im Spreizbereich 10 im Spritzgussverfahren allein durch zwei Formhälften und ohne Kernnadel gebildet werden.

Im Halsbereich 11 weist der Schaft einen Schlitz 40 auf, der sich axial ausgehend vom Spreizbereich 10 bis zum rückwärtigen Ende 42 des Schafts 1 erstreckt, und der zum rückwärtigen Ende 42 des Schafts 1 hin offen ist. Der Schlitz 40 bildet einen radialen Zugang von aussen in den Spreizkanal 5 hinein, das heisst der Spreizkanal 5 ist durch den Schlitz 40 über die gesamte axiale Erstreckung des Halsbereichs 11 radial nach aussen hin offen. Der Schlitz 40 ermöglicht eine Fertigung des Halsbereichs 11 im Spritzgussverfahren mittels eines seitlich eingefahrenen Formwulstes.

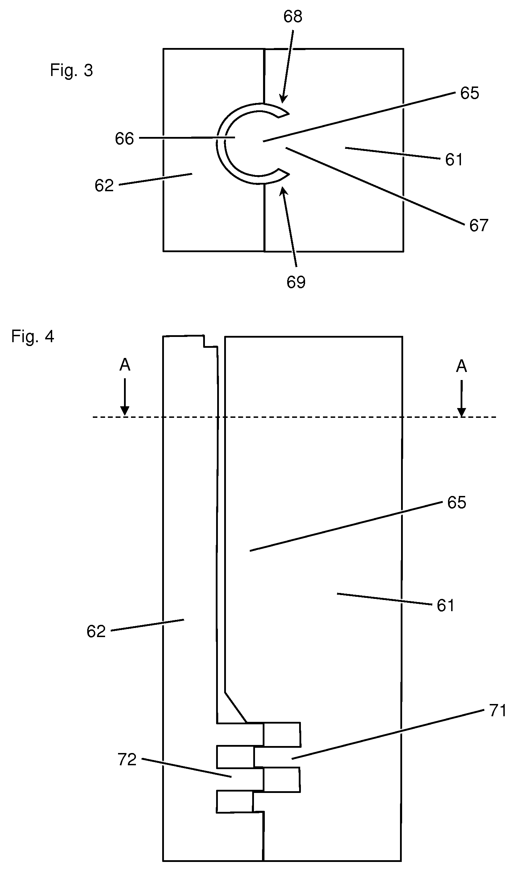

Ein Beispiel eines Formwerkzeugs zum Herstellen des Schafts 1 eines Dübels ist in den Figuren 3 und 4 gezeigt. Das Formwerkzeug weist zwei benachbarte Formhälften 61, 62 auf. Im unteren Endbereich weisen die Formhälften 61, 62 jeweils eine Vielzahl von Dornen 71 beziehungsweise 72 auf, welche zum Formen der Einstiche 31, 32 und damit auch des Spreizkanals 5 im Spreizbereich 10 des Schafts 1 vorgesehen sind.

Beabstandet zu den Dornen 71 weist die erste Formhälfte 61 einen Formwulst 65 auf, der zum Formen des Spreizkanals 5 im Halsbereich 11 des Schafts 1 vorgesehen ist. Die zweite Formhälfte 62 weist eine entsprechende Ausnehmung 66 aus, in welcher der Formwulst 65 bei geschlossener Form teilweise aufgenommen ist. Der Formwulst 65 ist über einen Steg 67 mit der ersten Formhälfte 61 verbunden, wobei der Steg 67 zwei gegenüberliegende Hinterschneidungen 68 und 69 bildet. Der Steg 67 formt den Schlitz 40 im Halsbereich 11 des Schafts 1, wobei die Elastizität des verwendeten Kunststoffs eine Zwangsentformung aus den Hinterschneidungen 68 und 69 zulässt.

Bevorzugt ist der Steg 67 vollständig und der Formwulst 65 teilweise in die erste Formhälfte 61 eingesenkt, das heisst die erste Formhälfte 61 weist eine Vertiefung auf, in welcher der Steg 67 vollständig und der Formwulst 65 teilweise, nämlich in seinem dem Steg 67 zugewandten Randbereich, aufgenommen ist.

## Patentansprüche

1. Spreizdübel mit
einem Schaft (1), der einen vom rückwärtigen Ende (42) des Schafts (1) ausgehenden Halsbereich (11) sowie einen Spreizbereich (10) aufweist, der sich, axial zum vorderen Ende (41) des Schafts hin versetzt, an den Halsbereich (11) anschliesst, und
einem Spreizkanal (5), der den Halsbereich (11) und den Spreizbereich (10) des Schafts (1) durchläuft,
wobei der Schaft (1) im Spreizbereich (10) durch Einführen eines Expansionselements in den Spreizkanal (5) zum Verankern des Spreizübels in einem Bohrloch radial aufweitbar ist, und
wobei der Spreizkanal (5) im Spreizbereich (10) durch Einstiche (31, 32) gebildet ist, die vom Schaftumfang ausgehen und in das Schaftinnere führen,
**dadurch gekennzeichnet,**
**dass** der Schaft im Halsbereich (11) einen Schlitz (40) aufweist, der von aussen in den Spreizkanal (5) reicht, der sich ausgehend vom Spreizbereich (10) bis zum rückwärtigen Ende (42) des Schafts erstreckt, und der zum rückwärtigen Ende (42) des Schafts (1) hin offen ist.

2. Spreizdübel nach Anspruch 1,
**dadurch gekennzeichnet,**
**dass** er ein Tellerelement (20) mit einem Halteteller (21) für eine Dämmstoffplatte aufweist, wobei das Tellerelement (20) im Bereich des rückwärtigen Endes (42) des Schafts (1) am Schaft (1) befestigt ist.

3. Spritzgusswerkzeug zum Herstellen des Schafts (1) eines Spreizdübels nach einem der vorstehenden Ansprüche, mit einer ersten Formhälfte (61) und einer zweiten Formhälfte (62), wobei an jeder Formhälfte (61, 62) eine Vielzahl von Dornen (71, 72) zum Formen der Einstiche (31, 32) angeordnet ist, und wobei die erste Formhälfte (61) einen Formwulst (65) zum Formen des Spreizkanals (5) im Halsbereich (11) aufweist.

4. Spritzgusswerkzeug nach Anspruch 3,
**dadurch gekennzeichnet,**
**dass** der Formwulst (65) über einen Steg (67) mit der ersten Formhälfte (61) verbunden ist, wobei Steg (67) zwei Hinterschneidungen (68, 69) bildet.

5. Spritzgusswerkzeug nach Anspruch 3 oder 4,
**dadurch gekennzeichnet,**
**dass** der Steg (67) zumindest bereichsweise in die erste Formhälfte (61) eingesenkt ist.

## Claims

1. Expansion dowel comprising
a shank (1) having a neck region (11) departing from the rear end (42) of the shank (1) and an expansion region (10) following the neck region (11) and offset axially towards the front end (41) of the shank and
an expansion channel (5) passing through the neck region (11) and the expansion region (10) of the shank (1),
wherein the shank (1) can be widened radially in the expansion region (10) by inserting an expansion element into the expansion channel (5) in order to anchor the expansion dowel in a drill hole and
wherein the expansion channel (5) is formed in the expansion region (10) by grooves (31, 32) departing from the circumference of the shank and leading into the interior of the shank,
**characterised in that**
the shank is provided in the neck region (11) with a slot (40) extending into the expansion channel (5) from the outside, extending from the expansion region (10) to the rear end (42) of the shank and open towards the rear end (42) of the shank (1).

2. Expansion dowel according to claim 1, **characterised in that** it has a plate element (20) with a retaining plate (21) for an insulating board, wherein the plate element (20) is fastened to the shank (1) in the region of the rear end (42) of the shank (1).

3. Injection mould for producing the shank (1) of an expansion dowel according to one of the preceding claims, comprising a first mould half (61) and a second mould half (62), wherein a plurality of pins (71, 72) are arranged on each mould half (61, 62) in order to form the grooves (31, 32) and wherein the first mould half (61) has a mould bead (65) for forming the expansion channel (5) in the neck region (11).

4. Injection mould according to claim 3, **characterised in that** the mould bead (65) is connected to the first mould half (61) by means of a web (67), wherein the web (67) forms two undercuts (68, 69).

5. Injection mould according to claim 3 or claim 4, **characterised in that** the web (67) is countersunk into the first mould half (61) at least in some areas.

## Revendications

1. Cheville à expansion comportant :
une tige (1) comportant une zone de col (11) partant de l'extrémité arrière (42) de la tige (1) ainsi qu'une zone d'expansion (10) qui se décale axialement par rapport à l'extrémité avant (41) de la tige, adjacente à la zone de col (11), et
un canal d'expansion (5) qui s'étend à travers la zone de col (11) et la zone d'expansion (10) de la tige (1),
dans laquelle la tige (1) peut s'élargir radialement dans la zone d'expansion (10) en introduisant un élément d'expansion dans le canal d'expansion (5) pour ancrer la cheville à expansion dans un trou percé, et
dans laquelle le canal d'expansion (5) est formé dans la zone d'expansion (10) par des encoches (31, 32) qui partent de la circonférence de la tige et mènent dans l'intérieur de la tige,
**caractérisée en ce que**
la tige comporte une fente (40) dans la zone de col (11), laquelle fente s'étend depuis l'extérieur dans le canal d'expansion (5) qui part de la zone d'expansion (10) jusqu'à l'extrémité arrière (42) de la tige, et débouche dans l'extrémité arrière (42) de la tige (1).

2. Cheville à expansion selon la revendication 1, **caractérisée en ce qu'**elle comporte un élément à disque (20) avec un disque de retenue (21) pour une plaque de matériau isolant, dans laquelle l'élément à disque (20) est fixé sur la tige (1) dans la zone de l'extrémité arrière (42) de la tige (1).

3. Moule d'injection pour la fabrication de la tige (1) d'une cheville à expansion selon l'une des revendications précédentes, comportant un premier demi-moule (61) et un second demi-moule (62), dans lequel sur chaque demi-moule (61, 62) est agencée une pluralité de mandrins (71, 72) pour former les encoches (31, 32), et dans lequel le premier demi-moule (61) comporte un bossage de moule (65) pour former le canal d'expansion (5) dans la zone de col (11).

4. Moule d'injection selon la revendication 3, **caractérisé en ce que** le bossage de moule (65) est relié au premier demi-moule (61) par une nervure (67), dans lequel la nervure (67) forme deux contre-dépouilles (68, 69).

5. Moule d'injection selon la revendication 3 ou 4, **caractérisé en ce que** la nervure (67) est enfoncée au moins dans certaines zones dans le premier demi-moule (61).
